# FASCICULE DE BREVET EUROPEEN

(11) **EP 0 556 073 B1**
(45) Date de publication et mention de la délivrance du brevet: **10.09.1997**
(21) Numéro de dépôt: 93400067.0
(22) Date de dépôt: 13.01.1993
(51) Int. Cl.: H04M 11/08, H04N 1/32

(54) **Station combinant un télécopieur et un terminal videotex de la marque minitel**
Kombiniertes Faksimile- und Bildschirmgerät (Minitel)
Device combining a facsimile and videotext minitel terminal

(30) Priorité: 14.01.1992 FR 9200298
(43) Date de publication de la demande: 18.08.1993
(73) Titulaire: SOCIETE D'APPLICATIONS GENERALES D'ELECTRICITE ET DE MECANIQUE S A G E M, F-75783 Paris Cedex 16 (FR)
(72) Inventeur: Charbonnier, Philippe, F-78600 Maison Laffitte (FR)
(74) Mandataire: Bloch, Gérard

(56) Documents cités:
- EP-A- 0 292 355
- EP-A- 0 394 096
- THE NEW WORLD OF THE INFORMATION SOCIETY 30 Octobre 1984, AMSTERDAM,NL pages 293 - 298 W.STAUDINGER 'evolution of the telematic terminal equipment in an OSI & ISDN environment , as seen from the viewpoint of the CCITT group VIII'
- PATENT ABSTRACTS OF JAPAN vol. 12, no. 285 (E-642)4 Août 1988 & JP-A-63 061 555

## Description

Un terminal vidéotex de la marque Minitel, ci-après désigné terminal Minitel, schématiquement, comprend un processeur, un modem V23, défini par la recommandation CCITT correspondante, un écran et un clavier et une prise péri-informatique, tous ces éléments étant reliés au processeur, ainsi qu'un commutateur pour relier une ligne téléphonique du réseau téléphonique commuté RTC soit au modem soit à un poste téléphonique (voir EP-A-0 394 096).

Un tel terminal, avec son modem V23, ne peut accéder qu'aux serveurs vidéotex basse vitesse, de 1 200 b/s.

L'accés aux serveurs vidéotex moyenne vitesse, de 4 800 b/s ou 9 600 b/s, n'est possible qu'avec respectivement des modems V27 ter ou V29 des recommandations CCITT correspondantes.

Un télécopieur RTC, pour ne considérer d'abord que celui-ci, schématiquement, comprend un processeur, un modem V27 ter - V29, une imprimante, ces éléments étant reliés au processeur, des couches de protocole ainsi qu'un commutateur pour relier une ligne téléphonique du réseau RTC soit au modem soit à un poste téléphonique.

L'existence d'un modem V27 ter - V29 dans un télécopieur, d'une part, et le fait que, selon un néologisme proposé ici, la vidéotexie moyennes vitesses repose sur des modems V27 ter, V29, d'autre part, ont donné l'idée à la demanderesse de combiner un télécopieur et un terminal Minitel en une seule station pour augmenter la vitesse de traitement du terminal Minitel et lui permettre d'accéder aux serveurs moyenne vitesse.

La présente invention concerne donc d'abord une station combinant un terminal Minitel, comprenant un processeur, un modem V23, un clavier, un écran, une prise péri-informatique et un commutateur pour relier une ligne RTC soit au modem soit à un poste téléphonique, et un télécopieur RTC, comprenant un processeur, un modem V27 ter - V29, une imprimante, des couches de protocole et un commutateur pour relier la ligne RTC soit au modem soit au poste téléphonique, caractérisée par le fait que le processeur du terminal Minitel est relié au modem du télécopieur par le processeur du télécopieur et la prise péri-informatique du terminal Minitel, les couches de protocole du télécopieur comprennent une couche X32, de la recommandation CCITT correspondante pour la vidéotexie moyenne vitesse, et le télécopieur comporte une touche RHM agencée pour, après établissement d'une liaison entre la ligne téléphonique et le modem du terminal Minitel, commander le commutateur du télécopieur et commuter la ligne téléphonique du modem du terminal Minitel sur le modem du télécopieur.

L'invention est remarquable à double titre.

En premier lieu, quand un usager utilise la prise péri-informatique d'un terminal Minitel, pour lui raccorder un équipement, par exemple une imprimante, il passe normalement à travers cette prise un flot de données s'écoulant du processeur du terminal vers l'extérieur. Or dans le cadre de la station de l'invention, le flot de données à travers la prise péri-informatique du terminal Minitel est de sens inverse, la communication passant de la ligne téléphonique, au télécopieur, à la prise péri-informatique et au terminal Minitel.

En second lieu, aussi bien l'affichage sur l'écran du terminal Minitel que la télé-impression peuvent, grâce à l'invention, être accélérés, le télécopieur se comportant en accélérateur de terminal Minitel. En traitement moyenne vitesse, la télé-impression vidéotex s'effectue sur l'imprimante du télécopieur, directement à travers son propre processeur, alors qu'à basse vitesse, la télé-impression s'effectue aussi sur l'imprimante du télécopieur, mais à travers le modem et le processeur du terminal Minitel et le processeur du télécopieur.

Dans une forme de réalisation intéressante de la station de l'invention, le télécopieur RTC comporte des moyens de décodage photographique pour permettre à la station ainsi réalisée d'accéder à des serveurs vidéotex à codage photographique qui sont des serveurs moyenne vitesse donc inaccessibles à un terminal Minitel ordinaire qui ne peut afficher ou imprimer que des caractères. A défaut pour le terminal Minitel de pouvoir afficher à l'écran les données transmises par un serveur photographique, celles-ci peuvent au moins être imprimées sur l'imprimante du télécopieur RTC et visualisées sur papier.

L'invention concerne aussi une station combinant un terminal Minitel, comprenant un processeur, un modem V23, un clavier et un écran, une prise péri-informatique et un commutateur pour relier une ligne RTC soit au modem soit à un poste téléphonique, et un télécopieur relié à une ligne du réseau numérique à intégration de services RNIS, comprenant un processeur, un modem V21-V27 ter - V29, une imprimante, des couches de protocole et une interface de liaison à la ligne, caractérisée par le fait que le processeur du terminal Minitel est relié au modem du télécopieur, par le processeur du télécopieur et la prise péri-informatique du terminal Minitel, et les couches de protocole du télécopieur comprennent une couche X32.

La station RNIS ne se distingue pas fondamentalement de la station RTC. L'une et l'autre apportent respectivement deux solutions quasiment identiques à un problème, en tout état de cause, unique, celui de l'accélération du traitement d'un terminal Minitel. C'est déjà par ce problème commun, que les deux stations RTC et RNIS de l'invention, qui y apportent des solutions très voisines, sont liées entre elles par un seul et même concept inventif. De surcroît, il était préférable et techniquement plus réaliste, compte-tenu des spécificités respectives des réseaux RTC et RNIS, de les dissocier, même s'il eut été possible de les définir, toutes deux, par un ensemble de caractéristiques communes.

Dans une forme de réalisation intéressante de la station RNIS de l'invention, le modem du télécopieur est un modem V23 - V21 - V27 ter - V29 pour offrir au terminal Minitel l'accès aux serveurs vidéotex usuels du réseau RTC, en l'absence de ligne RTC.

De préférence ici aussi, le télécopieur de la station RNIS comporte des moyens de décodage photographique.

L'invention sera mieux comprise à l'aide de la description suivante, en référence au dessin annexé, sur lequel :
- la figure 1 est une représentation schématique et structurelle d'une station associant un télécopieur RTC et un terminal Minitel, à vitesse de traitement normale,
- la figure 2 est une représentation schématique et structurelle d'une station de l'invention combinant un télécopieur RTC et un terminal Minitel et
- la figure 3 est une représentation schématique et structurelle d'une station de l'invention combinant un télécopieur RNIS et un terminal Minitel.

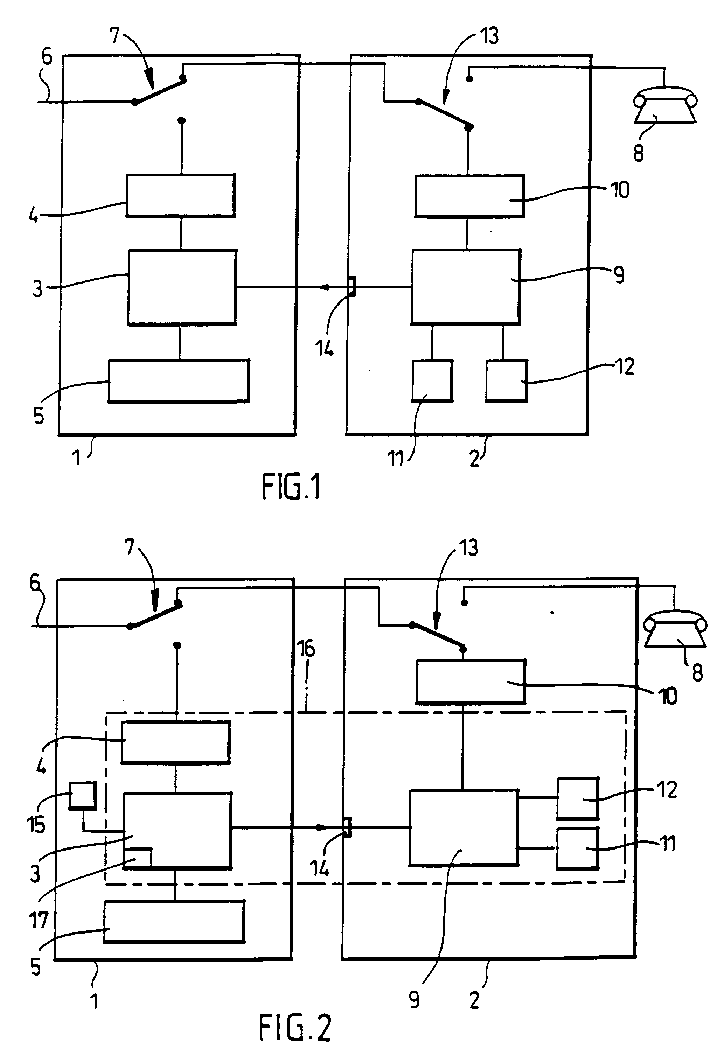

La station de la figure 1 associe un télécopieur 1 et un terminal Minitel 2, à basse vitesse. Le télécopieur 1 comporte, parmi d'autres composants bien connus, un processeur 3, reliés au processeur 3, un modem V27 ter/V29 référencé 4 et une imprimante 5. Le processeur 3 contient une mémoire de stockage de couches de protocole. Le modem 4 peut être relié à une ligne 6 du réseau RTC par un commutateur 7 qui peut aussi la relier à un poste téléphonique 8 à travers le terminal 2.

Le terminal 2 comporte, parmi d'autres composants bien connus, un processeur 9, reliés au processeur 9, un modem V23 référencé 10, un clavier 11 et un écran 12. Le modem 10 peut être relié à la ligne 6 par un commutateur 13, actionnable par une touche dite "connexion", et par l'intermédiaire aussi duquel le poste téléphonique 8 peut être relié à cette même ligne 6. Le terminal 2 comporte aussi une prise péri-informatique 14 par laquelle les deux processeurs 3, 9 sont reliés.

La station de la figure 1 présente la particularité de l'utilisation de l'imprimante 5 du télécopieur 1 en tant qu'équipement périphérique du terminal 2. Lors de cette utilisation, les données, à travers la prise 14, s'écoulent du terminal 2 vers le télécopieur 1.

La figure 2 représente une station RTC de l'invention qui, non plus associe, mais combine intimement le télécopieur et le terminal Minitel, dont les mêmes composants seront référencés de la même manière que sur la figure 1, dans un souci de bonne compréhension. Les deux processeurs 3, 9 sont encore reliés entre eux à travers la prise péri-informatique 14, c'est-à-dire que le processeur 9 du terminal 2 est relié au modem 4 du télécopieur 1. Les couches de protocole de la mémoire de stockage 17 du processeur 3 comprennent une couche X32. Le télécopieur comporte une touche 15 de relation homme-machine (RHM) qui, par l'intermédiaire du processeur 3, peut commander le commutateur 7 pour, à partir de l'état illustré sur la figure 2, dans lequel le modem 10 du terminal 2 est relié à la ligne 6, faire basculer le commutateur 7 et relier la ligne 6 au modem 4 du télécopieur et former finalement un terminal Minitel accéléré 16 comprenant les deux processeurs 3, 9, reliés par la prise 14, à travers laquelle le flot de données s'écoule du télécopieur vers le terminal, le modem 4 du télécopieur 1 et le clavier 11 et l'écran 12 du terminal 2. Avec un terminal 2 de type MIB et la partie V27 ter du modem 4, la station a accès à des serveurs vidéotex à 4 800 b/s et, avec la partie V29 du modem 4 et un terminal 2 de type M2, la station a accès à des serveurs à 9 600 b/s, c'est-à-dire que la station permet un affichage 4 ou 8 fois plus rapide.

En outre, la mémoire 17 du télécopieur 1 contient des logiciels d'impression d'écran et de télé-impression en codage caractère ou télécopie, si bien que, dans les applications de télé-impression en codage télécopie, dans lesquelles la quantité d'informations est importante, la station tire un bénéfice de l'accroissement de vitesse. La mémoire 17 contient aussi des logiciels de décodage d'écrans photographiques, ici à 64 nuances de gris codés JPEG, et d'impression d'écran en 16 nuances de gris.

Si le terminal 2 est un terminal photographique, le télécopieur saisit en mémoire le flot s'écoulant à travers la prise et, sur demande, décode le dernier écran et l'imprime sur l'imprimante 5. Si le terminal 2 est un terminal ordinaire, le télécopieur 1, par son modem 4, communique avec le serveur en moyenne vitesse et délivre au terminal 2, pour affichage, les écrans interactifs sans les portions photographiques. Par contre, ces écrans interactifs peuvent être directement affichés sur l'imprimante 5 et être ainsi visualisés.

Le télécopieur 1 dispose ici d'une tête d'écriture thermique série à barrette d'une largeur de 1 728 points noirs et blancs. Un écran vidéotex pour terminal Minitel contient 320 x 240 pixels représentés par 1 280 x 960 points noirs et blancs, les 1 280 points étant centrés dans les 1 728 points de la largeur d'écriture. C'est pourquoi il est procédé à la réduction de 64 à 16 nuances de gris. Un pixel vidéotex est représenté par une matrice de 4 x 4 points noirs et blancs, ce qui permet de rendre 16 nuances de gris. La nuance réelle, parmi 64, est approchée par la nuance disponible, parmi 16, la plus proche.

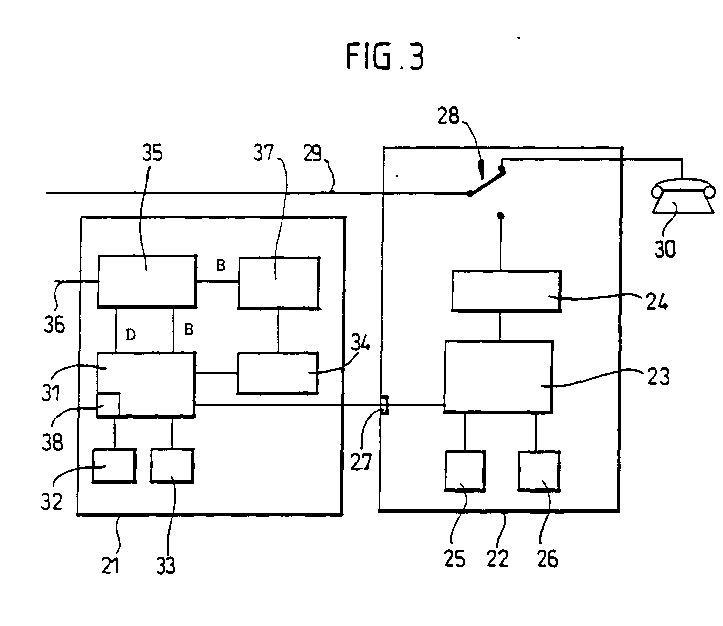

La figure 3 représente une station RNIS de l'invention qui combine un télécopieur RNIS 21 et un terminal Minitel 22. Le terminal 22, tout comme le terminal 2, comporte un processeur 23, reliés au processeur 23, un modem V23 référencé 24, un clavier 25, un écran 26, une prise péri-informatique 27 et un commutateur 28 par l'intermédiaire duquel peut être relié à une ligne RTC 29 soit le modem 24 soit un poste téléphonique 30.

Le télécopieur RNIS 21 comporte un processeur 31, et reliés au processeur, un scanner 32, une imprimante 33, un modem V21 - V27 ter - V29 référencé 34 et une interface 35, de liaison à une ligne 36 du réseau RNIS et reliée au modem 34 par un codeur - décodeur (codec) 37. Le processeur 31 contient une mémoire 38 de stockage de logiciels et de couches de protocole et notamment des logiciels JPEG de décodage d'écrans photograghiques et une couche de protocole X32. Le processeur 23 du terminal 22, par la prise péri-informatique 27, est relié au processeur 31 du télécopieur et donc à son modem 34. Sur la ligne 36, peuvent être transmis deux canaux B à 64 kb/s, pour les données, et un canal D à 16 kb/s, pour la signalisation. Le processeur 31 gère la commande d'accès RNIS avec les protocoles de canal D, la communication sur canal B en mode transparent CCBT (commutation de circuits sur canal B transparente) jusqu'à 64 kb/s avec une pile de protocoles (X25 et ETS 300080) de télécopie G4 ou de vidéotexie moyenne ou haute vitesse, la communication sur canal B en mode non transparent CCBNT, à travers le codec 37 et le modem 34 avec des protocoles de télécopie G3 ou de vidéotexie basse vitesse. Le processeur 31 contrôle aussi les fonctions de téléphonie RNIS ainsi que les applications téléphonie et vidéotexie sur RNIS.

Le télécopieur 21 est utilisé ici en accélérateur du terminal Minitel 22, pour lui offrir l'accès aux serveurs moyenne vitesse à 9 600 b/s du réseau RTC, par le canal B en mode CCBNT, les fonctions V27 ter - V29 du modem 31, les protocoles X32 et ETS 300079, et aux serveurs haute vitesse à 64 kb/s, mais ralentie à 9 600 b/s par contrôle de flux dans le processeur 31, par le canal B en mode CCBT et les protocoles X25 de la couche X32 et ETS 300080. En moyenne et haute vitesses, grâce aux logiciels de décodage d'écrans photographiques, l'imprimante 33 peut imprimer des écrans émis par les serveurs.

En ce qui concerne l'accroissement de la vitesse d'affichage du terminal 22, il dépend naturellement du type du terminal et de la vitesse supportable par sa prise péri-informatique (4 800 b/s pour un terminal M1B, 9 600 b/s pour un terminal M2).

Si la station n'était pas directement desservie par la ligne 29, et avec un modem "gonflé" V23 - V21 - V27 ter - V29, le télécopieur 21 offrirait au terminal 22 l'accès aux serveurs vidéotex usuels à basse vitesse du réseau RTC, par le canal B en mode CCBNT et la fonction V23 du modem 31.

## Revendications

1. Station combinant un terminal Minitel (2), comprenant un processeur (9), un modem V23 (10), un clavier (11), un écran (12), une prise péri-informatique (14) et un commutateur (13) pour relier une ligne réseau téléphonique commuté RTC (6) soit au modem (10) soit à un poste téléphonique (8), et un télécopieur RTC (1), comprenant un processeur (3), un modem V27 ter - V29 (4), une imprimante (5), des couches de protocole (17) et un commutateur (7) pour relier la ligne RTC (6) soit au modem (4) soit au poste téléphonique (8), caractérisée par le fait que le processeur (9) du terminal Minitel (2) est relié au modem (4) du télécopieur (1) par le processeur (3) du télécopieur (1) et la prise péri-informatique (14) du terminal Minitel (2), les couches de protocole (17) du télécopieur (1) comprennent une couche X32, et le télécopieur (1) comporte une touche relation homme-machine RHM (15) agencée pour, après établissement d'une liaison entre la ligne téléphonique (6) et le modem (10) du terminal Minitel (2), commander le commutateur (7) du télécopieur (1) et commuter la ligne téléphonique (6) du modem (10) du terminal Minitel (2) sur le modem (4) du télécopieur (1).

2. Station selon la revendication 1, dans laquelle le télécopieur (1) comporte des moyens (17) de décodage photographique pour l'accès à des serveurs vidéotex moyenne vitesse à codage photographique.

3. Station selon l'une des revendications 1 et 2, dans laquelle le télécopieur (1) contient des logiciels (17) d'impression d'écran et de télé-impression en codage caractère et télécopie.

4. Station selon l'une des revendications 1 à 3, dans laquelle le terminal (2) est un terminal photographique.

5. Station combinant un terminal Minitel (22), comprenant un processeur (23), un modem V23 (24), un clavier (25) et un écran (26), une prise péri-informatique (27) et un commutateur (28) pour relier une ligne réseau téléphonique commuté RTC (29) soit au modem (24) soit à un poste téléphonique (30), et un télécopieur (21) relié à une ligne (36) du réseau numérique à intégration de services RNIS, comprenant un processeur (31), un modem V21- V27 ter - V29 (34), une imprimante (33), des couches de protocole (38) et une interface (35) de liaison à la ligne (36), caractérisée par le fait que le processeur (23) du terminal Minitel (22) est relié au modem (34) du télécopieur (21), par le processeur du télécopieur (31) et la prise péri-informatique (27) du terminal Minitel (22), et les couches de protocole (38) du télécopieur (21) comprennent une couche X32.

6. Station selon la revendication 5, dans laquelle le modem (34) est un modem V23 - V21 - V27 ter -V29.

7. Station selon l'une des revendications 5 et 6, dans laquelle le télécopieur (21) comporte des moyens (38) de décodage photographique.

8. Station selon l'une des revendications 5 à 7, dans laquelle le télécopieur (21) est agencé pour offrir au terminal Minitel (22) l'accès en mode CCBT à des serveurs haute vitesse ralentie à 9600 b/s.

## Patentansprüche

1. Station, die ein Minitel-Terminal (2), das einen Prozessor (9), ein Modem V23 (10), eine Tastatur (11), einen Bildschirm (12), eine Buchse (14) für computer Datentechnik sowie einen Umschalter (13) aufweist, um eine Schaltfernsprechnetzleitung RTC (6) entweder mit dem Modem (10) oder einem Fernsprechapparat (8) zu verbinden, mit einem Fernkopierer RTC (1) kombiniert, der einen Prozessor (3), ein Modem V27 C - V29 (4), einen Drucker (5), Protokollschichten (17) sowie einen Umschalter (7) aufweist, um die Leitung RTC (6) entweder mit dem Modem (4) oder mit dem Fernsprechapparat (8) zu verbinden, dadurch gekennzeichnet, daß der Prozessor (9) des Minitel-Terminals (2) über den Prozessor (3) des Fernkopierers (1) und die Buchse (14) für computer Datentechnik des Minitel-Terminals (2) mit dem Modem (4) des Fernkopierers (1) verbunden ist, die Protokollschichten (17) des Fernkopierers (1) eine Schicht X32 aufweisen und der Fernkopierer (1) eine Mensch-Maschinen-Beziehungstaste RHM (15) aufweist, die vorgesehen ist, um nach dem Herstellen einer Verbindung zwischen der Fernsprechleitung (6) und dem Modem (10) des Minitel-Terminals (2) den Umschalter (7) des Fernkopierers (1) zu steuern und die Fernsprechleitung (6) von dem Modem (10) des Minitel-Terminals (2) auf das Modem (4) des Fernkopierers (1) umzuschalten.

2. Station nach Anspruch 1, bei der der Fernkopierer (1) Mittel (17) zur photographischen Decodierung zum Zugang zu Videotext-Servern mittlerer Geschwindigkeit mit photographischer Codierung aufweist.

3. Station nach einem der Ansprüche 1 und 2, bei der der Fernkopierer (1) Software (17) zum Bildschirmdruck und zum Teledruck in Zeichencodierung und Telefax enthält.

4. Station nach einem der Ansprüche 1 bis 3, bei der das Terminal (2) ein photographisches Terminal ist.

5. Station, die ein Minitel-Terminal (22), das einen Prozessor (23), ein Modem V23 (24), eine Tastatur (25) und einen Bildschirm (26), eine Buchse (27) für computer Datentechnik sowie einen Umschalter (28) aufweist, um eine Schaltfernsprechnetzleitung RTC (29) entweder mit dem Modem (24) oder einem Fernsprechapparat (30) zu verbinden, mit einem Fernkopierer (21) kombiniert, der mit einer Leitung (36) des dienstintegrierten Digitalnetzes ISDN verbunden ist und einen Prozessor (31), ein Modem V21 - V27 C - V29 (34), einen Drucker (33), Protokollschichten (38) sowie eine Schnittstelle (35) zur Verbindung mit der Leitung (36) aufweist, dadurch gekennzeichnet, daß der Prozessor (23) des Minitel-Terminals (22) über den Prozessor (31) des Fernkopierers und die Buchse (27) für computer Datentechnik des Minitel-Terminals (22) mit dem Modem (34) des Fernkopierers (21) verbunden ist und die Protokollschichten (38) des Fernkopierers (21) eine Schicht X32 aufweisen.

6. Station nach Anspruch 5, bei der das Modem (34) ein Modem V23 - V21 - V27 C - V29 ist.

7. Station nach einem der Ansprüche 5 und 6, bei der der Fernkopierer (21) Mittel (38) zur photographischen Decodierung aufweist.

8. Station nach einem der Ansprüche 5 bis 7, bei der der Fernkopierer (21) vorgesehen ist, um dem Minitel-Terminal (22) den Zugriff im CCBT-Modus zu Hochgeschwindigkeitsservern verlangsamt auf 9600 b/s zu bieten.

## Claims

1. Station combining a Minitel terminal (2), comprising a processor (9), a V23 modem (10), a key board (11), a screen (12), a computer socket (14) and a switch (13) to link a telephone network RTC line (6) either to the modem (10) or to a telephone set (8), and a RTC fax (1), comprising a processor (3), a V27 c - V29 modem (4), a printer (5), protocol layers (17) and a switch (7) to link the RTC line (6) either to the modem (4) or the telephone set (8), characterised by the fact that the processor (9) of the Minitel terminal (2) is linked to the fax (1) modem (4) by the fax (1) processor (3) and the computer socket (14) on the minitel terminal (2), the fax (1) protocol layers (17) comprise an X32 layer, and the fax (1) comprises an operator-machine relation RHM button (15) which is arranged, after establishing a link between the telephone line (6) and the Minitel terminal (2) modem (10), to command the switch (7) on the fax (1) and switch over the telephone line (6) of the modem (10) on the Minitel terminal (2) to the modem (4) on the fax (1).

2. Station according to claim 1, in which the fax (1) comprises photographic decoding means (17) for access to the photographic coding medium speed videotex servers.

3. Station according to one of claims 1 and 2, in which the fax (1) contains screen printing and remote printing with character coding and fax software (17).

4. Station according to one of claims 1 to 3, in which the terminal (2) is a photographic terminal.

5. Station combining a Minitel terminal (22), comprising a processor (23), a V23 modem (24), a key board (25) and a screen (26), a computer socket (27) and a switch (28) to connect a telephone network RTC line (29) either to a modem (24) or to a telephone set (30), and a fax (21) linked to a line (36) on the integrated service digital network ISDN, comprising a processor (31), a V21 - V27c - V29 modem (34), a printer (33), protocal layers (38) and a line (36) link interface (35), characterised by the fact that the processor (23) of the Minitel terminal (22) is linked to the modem (34) of the fax (21) by the fax processor (31) and the compute socket (27) on the Minitel terminal (22), and the protocol layers (38) of the fax (21) comprise an X32 layer.

6. Station according to claim 5, in which the modem (34) is a V23 - V21 - V27C - V29 modem.

7. Station according to one of claims 5 and 6 in which the fax (21) comprises phographic decoding means (38).

8. Station according to one of claims 5 to 7, in which the fax (21) is arranged to offer the Minitel terminal (22) access in CCBT mode to high speed servers slowed down to 9600b/s.
